# EUROPEAN PATENT SPECIFICATION

(11) **EP 4 344 185 B1**
(45) Date of publication and mention of the grant of the patent: **09.12.2026**
(21) Application number: 22819313.2
(22) Date of filing: 18.05.2022
(51) Int. Cl.: H04N 23/54, H04N 23/55, H04N 23/57, G02B 7/04, G02B 7/09, G03B 5/02, H02K 41/035, G02B 27/64, G03B 13/34, G03B 5/00, G02B 7/08, G03B 3/10

(54) **PHOTOSENSITIVE CHIP DRIVE DEVICE AND CAMERA MODULE**
LICHTEMPFINDLICHE CHIP-ANTRIEBSVORRICHTUNG UND KAMERAMODUL
DISPOSITIF D'ENTRAÎNEMENT DE PUCE PHOTOSENSIBLE ET MODULE DE CAMÉRA

(30) Priority: 10.06.2021 CN 202110645232
(43) Date of publication of application: 27.03.2024
(73) Proprietor: Ningbo Sunny Opotech Co., Ltd., Ningbo, Zhejiang 315400 (CN)
(72) Inventor: QUE, Jiayao, Yuyao, Zhejiang 315400 (CN); ZHAO, Bojie, Yuyao, Zhejiang 315400 (CN); FANG, Yinli, Yuyao, Zhejiang 315400 (CN); ZHOU, Ji, Yuyao, Zhejiang 315400 (CN); ZHENG, Xueying, Yuyao, Zhejiang 315400 (CN)
(74) Representative: Dantz, Jan Henning
(86) International application number: PCT/CN2022/093534
(87) International publication number: WO 2022/257715

(56) References cited:
- CN-A- 112 468 732
- CN-A- 112 468 732
- CN-A- 112 702 534
- CN-A- 112 770 060
- CN-A- 112 770 060
- KR-A- 20190 002 852
- TW-B- I 650 587

## Description

### FIELD OF INVENTION

The present disclosure relates to the technical field of camera modules, in particular to a photosensitive chip driving device and a camera module.

### DESCRIPTION OF RELATED ARTS

In the field of consumer electronics, especially in the field of smart phones, miniaturized and portable camera modules are indispensable components. At present, at least one camera module is configured on the portable terminal body. In order to meet the more and more extensive market demand, higher requirements are put forward for the characteristics of high pixel and high frame rate of the camera module, which is an irreversible development trend of the conventional camera module.

The motor is an indispensable component of the high-pixel camera module. During the operating process of the camera module, the motor can drive the lens to move in multiple directions to realize the optical auto-focus function (hereinafter referred to as AF function, Auto Focus) and optical anti-vibration function (hereinafter referred to as OIS function, Optical Image Stabilization). AF function refers to the function that the supporting frame with lens moves linearly in the optical axis direction by the motor to focus the subject, so as to produce a clear image at the imaging sensor (CMOS, CCD, etc.) located at the rear of the lens. OIS function refers to the function that when the lens has vibration caused by vibration, the supporting frame with the lens adaptively moves in the direction of compensating the vibration by the motor, for improving image clarity.

With the higher and higher requirements of imaging quality of mobile phone camera module, the size and weight of the lens are getting bigger and bigger, and the driving force of the motor is required to be higher and higher. However, the current electronic devices (such as mobile phones) have many limitations on the size of the camera module, and the occupied size of the motor increases correspondingly with the increase of the lens. In other words, with the development of the lens to a larger size and more weight, the driving force provided by the motor is difficult to increase accordingly. On the premise of limited driving force, the heavier the lens, the shorter the distance that the motor can drive the lens to move, which affects the focusing and anti-vibration ability. In order to achieve better light-focusing function and optical anti-vibration function, it is usually necessary to move at a larger distance.

On the other hand, due to the increase of lens weight, the motor-driven lens moves slowly, and the longer the lens reaches the predetermined compensation position, it will directly affect the focusing and anti-vibration effect, resulting in unclear images. If needed to increase the driving force of the motor, it needs to increase the size of the motor, which leads to the complexity of the motor apparatus, the increase of the number of components, and tends to increase the thickness of the electronic device.

CN 112 770 060 A refers to an optical element driving mechanism. CN 112 468 732 A refers to a four-axis anti-shake voice coil motor for miniature camera.

### SUMMARY OF THE PRESENT INVENTION

The present disclosure provides a molded photosensitive module of a photosensitive chip driving device according to claim 1 and a camera module according to claim 10. Some features of optional or preferred embodiments are recited in the dependent claims.

An object of the present disclosure is to provide a photosensitive chip driving device and a camera module. The magnetic force generated between a magnetic member and a magnet along the optical axis direction is conducive to maintaining the stability of a movable carrier in the camera module, maintaining the centering effect, and effectively preventing the photosensitive assembly with the movable carrier from falling off due to vibration or inversion of the camera module.

Another object of the present disclosure is to provide a photosensitive chip driving device and a camera module. Separating optical anti-vibration and auto-focus is conducive to obtaining a large anti-vibration distance and a large focusing distance, which is beneficial to compensate for the large vibration of the camera module without increasing the motor size and ensuring the miniaturization of the camera module.

Another object of the present disclosure is to provide a photosensitive chip driving device and a camera module, which have a simple structure and can ensure the miniaturization of the camera module, and realize the anti-vibration correction function and the reset function of the photosensitive assembly on the orthogonal plane of the optical axis and the AF function of the lens in the optical axis direction.

Another object of the present disclosure is to provide a photosensitive chip driving device and a camera module, which ensures displacement accuracy, reduces friction, and is conducive to improving the anti-vibration distance of the camera module by a supporting apparatus and a guiding slot.

In order to achieve the above object, the technical proposal of the present disclosure is that a photosensitive chip driving device according to claim 1, optional embodiments are according to claims 2-9.

A camera module according to claims 10-12 is also proposed.

### BRIEF DESCRIPTION OF THE DRAWINGS

Fig. 1 is a schematic structural view of a camera module according to an embodiment of the present disclosure;
Fig. 2 is an exploded view of the camera module according to the embodiment of the present disclosure;
Fig. 3 is a schematic structural view of a photosensitive assembly according to the embodiment of the present disclosure;
Fig. 4 is a schematic sectional view of the camera module according to the embodiment of the present disclosure;
Fig. 5 is a schematic structural view of a fixed base and a supporting apparatus according to the embodiment of the present disclosure;
Fig. 6 is a schematic structural view of a movable carrier and the supporting apparatus according to the embodiment of the present disclosure;
Fig. 7 is a schematic structural view of the movable carrier and an extending portion according to the embodiment of the present disclosure.

### REFERENCES IN THE DRAWINGS:

1. lens assembly; 2. photosensitive chip driving device; 10. movable carrier; 11. frame main body; 12. extending arm; 13. extending column 13; 20. carrier frame; 21. lens carrier; 22. fixed base; 221. containing cavity; 222. first opening; 223. second opening; 23. elastic supporter; 231. upper elastic piece; 232. lower elastic piece; 233. extending portion; 233a. conductive extending portion; 233b. reset extending portion; 234a. upper inner contour; 235a. upper outer contour; 236a. upper elastic portion; 234a. lower inner contour; 235a, lower outer contour; 236a. lower elastic portion; 237. first fixed end; 238. second fixed end; 239. suspended wire; 30. diving apparatus; 31. first coil; 32. second coil; 33. magnets; 41. guiding slot; 411. first track; 412, second track; 42. supporting apparatus; 43. magnetic member; 50. shell; 51. first shell body; 52. second shell body; 60. photosensitive assembly; 61. filter; 62. circuit board; 63. photosensitive chip; 64. electronic component.

### DETAILED DESCRIPTION OF THE EMBODIMENTS

Hereinafter, the present disclosure will be further described in connection with specific embodiments, and it should be noted that the embodiments described below or the technical features can be combined at random to form a new embodiment without conflict.

In the description of the present disclosure, it should be noted that the terms "center", "transverse", "longitudinal", "length", "width", "thickness", "up", "down", "front", "rear", "left", "right", "vertical", "horizontal", "top", "bottom", "inner", "outer", "clockwise", "counterclockwise" and the like, for orientation terms, indicate orientation and positional relationships based on those shown in the drawings, are intended for ease of description and simplification of the present disclosure only, and are not intended to indicate or imply that the device or element referred to must have a particular orientation, be constructed and operated in a particular orientation, and cannot be construed as limiting the specific scope of the present disclosure.

It should be noted that the terms "first", "second" and the like in the specification and claims of the present disclosure are used to distinguish similar objects and need not be used to describe a particular order or priority.

The terms "comprise" and "have" and any variations thereof in the specification and claims of the present disclosure are intended to cover non-exclusive inclusion, for example, processes, methods, systems, products, or devices that comprise a series of steps or units need not be limited to those clearly listed, but can comprise other steps or units not explicitly listed or inherent to such processes, methods, products, or devices.

It should be noted that, as used in the present disclosure, the terms "substantially", "approximately", and the like are used as terms indicative of approximation and not as terms indicative of degree, and are intended to illustrate inherent deviations in measured or calculated values as will be recognized by those of ordinary skill in the art.

In the description of the present disclosure, it should also be noted that the terms "dispose", "mount", "arrange" and "connect" are understood broadly, for example, to be fixed, detachable, or integrally connected, unless otherwise expressly specified and limited. It can be a mechanical connection or an electrical connection. It can be a direct connection, a contact connection, or an indirect connection via an intermediate medium, and it can be a communication between the two elements. The specific meanings of the above terms in the present disclosure can be understood by those of ordinary skill in the art on a case-by-case basis.

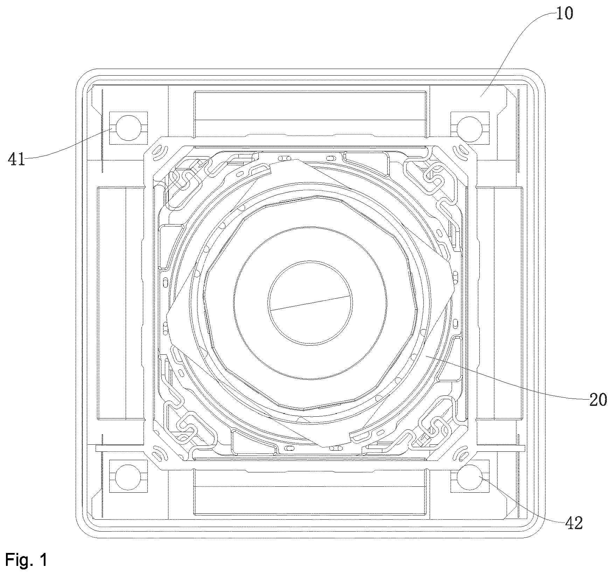

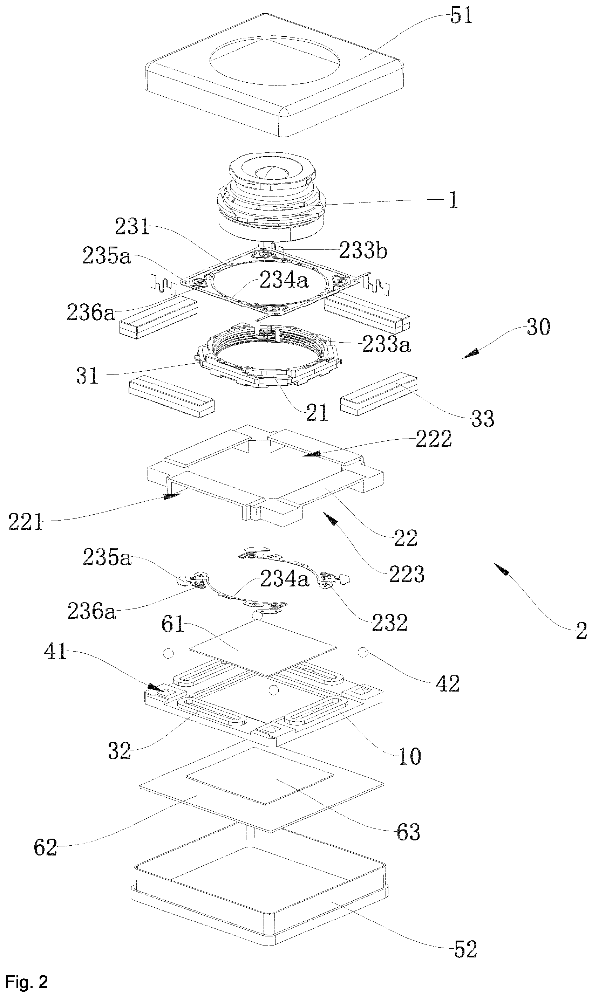

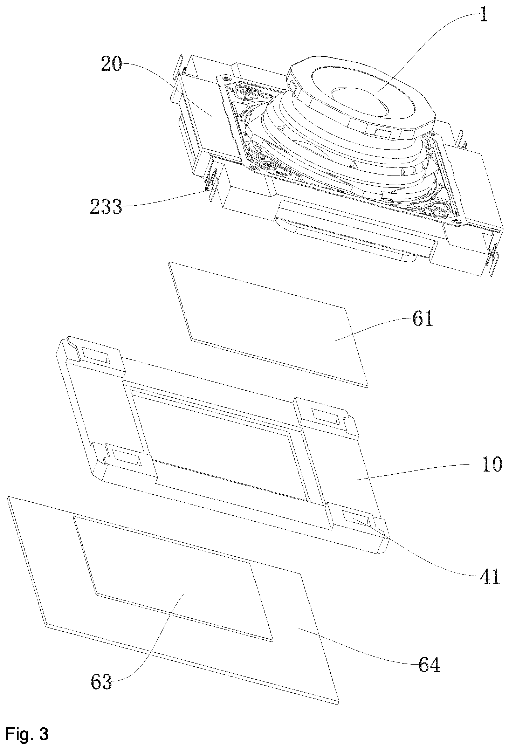

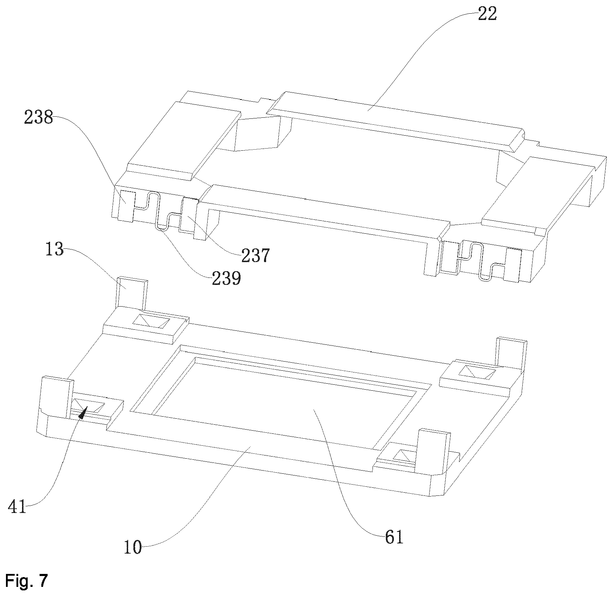

According to the first aspect of the present disclosure, a photosensitive chip driving device 2 is provided, as shown in Figs. 1 to 7. The photosensitive chip driving device 2 comprises a carrier frame 20 for receiving the lens assembly 1, a movable carrier 10, a diving apparatus 30, a guiding slot 41, a supporting apparatus 42 and a magnetic member 43, wherein the carrier frame 20 and the movable carrier 10 are disposed correspondingly at intervals along the optical axis direction, the diving apparatus 30 comprises at least one group of coils and at least one group of magnets 33 mounted on the peripheral side of the carrier frame 20, at least one group of coils is mounted on the peripheral side of the movable carrier 10, the guiding slot 41 is disposed between the movable carrier 10 and the carrier frame 20, the supporting apparatus 42 is movably disposed in the guiding slot 41, and the magnetic member 43 is mounted the movable carrier 10 and disposed correspondingly to the magnets 33, so that a magnetic force along the optical axis direction is generated between the magnetic member 43 and the magnets 33, and the movable carrier 10 is displaced along the orthogonal plane of the optical axis. Thus, the supporting apparatus 42 supports the relative movement between the movable carrier 10 and the carrier frame 20 along the guiding slot 41, which provides support and guidance for the movable carrier 10, and improves displacement accuracy and anti-vibration distance. Further, the magnetic force is generated along the optical axis and between the magnetic member 43 and the magnets 33, via the magnetic member 43 and the magnets 33 disposed correspondingly in the optical axis direction, so that the stability of the movable carrier 10 carrying the second coil 32 in the camera module is maintained conveniently, and the photosensitive assembly 60 with the movable carrier 10 is maintained in the center, for effectively preventing the movable carrier 10 from falling off due to vibration or inversion of the camera module.

The magnetic member 43 and the magnets 33 are disposed correspondingly along the optical axis direction and generate magnetic force along the optical axis direction. Since the magnetic member 43 and the magnets 33 are not completely aligned, as the movable carrier 10 moves radially along the orthogonal plane of the optical axis or rotates around the optical axis, the offset will occur between the magnets 33 and the magnetic member 43, but the plane where the magnets 33 is located and the plane where the magnetic member 43 is located are always parallel. Further, the plane where the magnets 33 is located and the plane where the magnetic member 43 is located are orthogonal to the optical axis respectively, so "magnetic force generated between the magnetic member 43 and the magnets 33 along the optical axis direction" refers to the magnetic force generated between the plane where the magnets 33 is located and the plane where the magnetic member 43 is located, comprising but not limited to the magnetic force in the vertical direction, offset the inclined magnetic attraction in the vertical direction.

In the present embodiment, orthogonal coordinate systems (X, Y, Z) are used. The Z direction is an optical axis direction and is a front-rear direction. The X direction and the Y direction orthogonal to the Z direction are the orthogonal optical axis direction. The X direction is an up-down direction (or a left-right direction), the Y direction is a left-right direction (or an up-down direction), and the plane orthogonal to the optical axis is a plane formed by the X direction and the Y direction. The "radial" is a direction orthogonal to the Z axis, and the "axial" refers to two corresponding arrangements between orthogonal planes of the Z axis, comprising not only a direction parallel to the Z axis but also a direction nearly parallel to the Z axis.

In some embodiments, the at least one group of coils comprises at least one first coil 31 and at least one second coil 32. The magnets 33 are respectively spaced apart from the first coil 31 and the second coil 32. The first coil 31 and the magnets 33 form a first magnetic field loop to drive the carrier frame 20 to move along the optical axis direction for auto-focusing. The second coil 32 and the magnets 33 form a second magnetic field loop to drive the movable carrier 10 to move along the orthogonal plane direction of the optical axis relative to the carrier frame 20 for vibration correction.

In some embodiments, the carrier frame 20 comprises a lens carrier 21 and a fixed base 22 disposed on the outer periphery of the lens carrier 21, the lens assembly 1 is received in the lens carrier 21, the first coil 31 is disposed on the outer periphery of the lens carrier 21, the magnets 33 are fixed on the peripheral side of the fixed base 22, the magnets 33 and the first coil 31 are radially disposed correspondingly, and the magnets 33 and the second coil 32 are axially disposed correspondingly, the second coil 32 is disposed on the movable carrier 10, and the movable carrier is fixed to the photosensitive assembly 60. The radially disposed correspondingly of the magnets 33 and the first coil 31 means that the magnets 33 and the first coil 31 are facing disposed in the X direction or the Y direction, and the axially disposed correspondingly of the magnets 33 and the second coil 32 means that the magnets 33 and the second coil 32 are facing disposed in the Z direction. The fixed base 22 is a stator.

If the first coil 31 is energized, the first magnetic field loop is formed based on the interaction between the magnetic field generated by the magnets 33 and the flow in the first coil 31, and a Lorentz force is generated to drive the lens carrier 21 with the first coil 31 to move in the Z direction relative to the fixed base 22, thereby driving the lens assembly 1 to move in the Z direction to realize auto-focusing. The Lorentz force is in a direction (Z direction) orthogonal to the direction of the magnetic field (X direction or Y direction) and the direction of the current in the first coil 31 (Y direction or X direction).

If the second coil 32 is energized, a Lorentz force is generated based on the interaction between the magnetic field of the magnets 33 and the current flowing in the second coil 32 to drive the movable carrier 10 with the second coil 32 to move in the X direction or the Y direction, thereby driving the photosensitive assembly 60 to move in the X direction or the Y direction to realize the OIS anti-vibration correction. The direction of the Lorentz force in the second magnetic field loop is a direction (Y direction or X direction) orthogonal to the direction of the magnetic field (Z direction) and the direction of the current (X direction or Y direction).

In some embodiments, the magnetic member 43 is located on the rear surface of the second coil 32, and the magnetic member 43 and the second coil 32 are fixed around the movable carrier 10 so as to be axially disposed correspondingly. That is, the magnetic member 43, which can be built into the movable carrier 10 as the magnetic member 43 is completely covered by the movable carrier 10, is overlapped with the second coil 32 fixed to the surface of the movable carrier 10, so to avoid increasing the height of the photosensitive chip driving device 2. The magnetic member 43 can also be embedded in the movable carrier 10, as the magnetic member 43 is partially embedded in the movable carrier 10, the front surface of the magnetic member 43 is higher than the surface of the movable carrier 10, and the second coil 32 is overlay on the front surface of the magnetic member 43. The magnetic member 43 can also be placed horizontally on the surface of the movable carrier 10, and the second coil 32 is overlay on the front surface of the magnetic member 43. The magnetic member 43 and the second coil 32 are both disposed corresponding to the magnets 33. The number of the magnetic members 43 is the same as the number of the magnets 33 and is at least three.

The magnetic member 43 is disposed corresponding to the magnets 33 in the Z direction instead of in the X direction or Y direction (for example, the magnetic member 43 is disposed on the side wall of the shell 50). When the magnetic member 43 is disposed on the side wall of the shell 50, the magnetic member 43 generates magnetic force in the X direction or Y direction to the magnets 33. In a case where the OIS distance increases, the distance between the magnets 33 and the magnetic member 43 will increase, and the magnetic force will decrease, resulting in difficulty in resetting the movable carrier 10. Without the magnetic member 43 and the magnets 33 in the X direction or the Y direction, the magnetic member 43 and the magnets 33 disposed correspondingly in the Z direction is conducive to generating the attraction force in the Z direction to the magnets 33. In a case where the required distance of the magnets 33 on the orthogonal plane of the optical axis increases, the distance between the magnetic member 43 and the magnets 33 is not affected by the OIS distance, which is conducive for the movable carrier 10 to realize a larger OIS distance and is beneficial to quick reset.

In some embodiments, the magnetic member 43 is a material such as an iron sheet and the like that can attract each other with the magnets 33 and generate a magnetic attraction. The fixed base 22 and the movable carrier 10 are rubbed and contacted by the supporting apparatus 42 by the magnetic force between the iron sheet and the magnets 33, so that the stability of the movable carrier 10 in the camera module is maintained, and the movable carrier 10 is maintained in the center without falling off with the vibration or inversion of the camera module. Further, the movable carrier 10 is quickly restored to an initial position after optical anti-vibration by the magnetic force between the magnetic member 43 and the magnets 33, and the initial position is the position of the movable carrier 10 before optical anti-vibration.

In some embodiments, the guiding slot 41 comprises a plurality of tracks, the tracks are respectively disposed on the facing surfaces of the movable carrier 10 and the fixed base 22, and each supporting apparatus 42 is received in each track, so that the supporting apparatus 42 is rotatably support the movable carrier 10 to move radially along the orthogonal plane of the optical axis. Thus, the track is provided between the movable carrier 10 and the fixed base 22, and the supporting apparatus 42 is received in the track, so that the supporting apparatus 42 maintains dynamic support for the movable carrier 10 during the process of moving the movable carrier 10 in the X direction and/or the Y direction relative to the fixed base 22 during optical anti-vibration, so that the movable carrier 10 slides smoothly and the displacement accuracy is ensured.

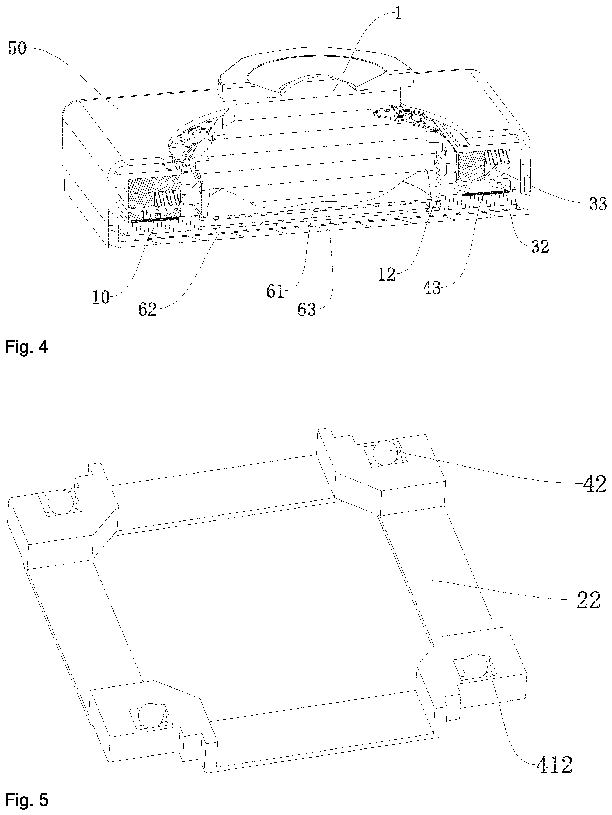

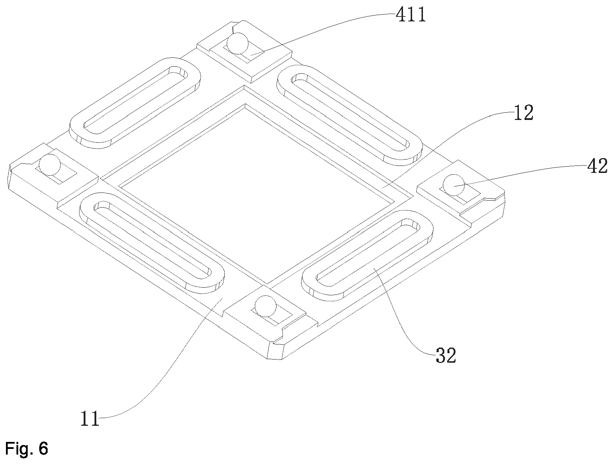

In some embodiments, the guiding slot 41 is provided with a first track 411 and a second track 412, the first track 411 and the second track 412 having a cross structure, respectively located at the intervals of the adjacent second coils 32, the first track 411 is opened on the upper surface of the movable carrier 10 in the X direction or Y direction, and the second track 412 is opened on the lower surface of the fixed base 22 in the Y direction or X direction relative to the first track 411, allowing the supporting apparatus 43 to move between the first track 411 and the second track 412, the supporting apparatus 42 being balls, as shown in Figs. 5 and 6. Therefore, by arranging the first track 411 and the second track 412 in different directions, the movement directions of the supporting apparatus 43 are limited within the track, which is conducive to guiding the movable carrier 10 in the moving process. Further, rolling friction is used instead of sliding friction via the balls, which further reduces the friction between the fixed base 22 and the movable carrier 10, effectively improves the movement stability of the movable carrier 10 in the optical anti-vibration process, and improves the imaging quality.

The upper surface of the movable carrier 10 and the lower surface of the fixed base 22 are along the optical axis direction, and the direction from the movable carrier 10 to the fixed base 22 is from bottom to top.

In some embodiments, the number of the supporting apparatus 42 is at least three, the number of the guiding slots 41 is at least three pairs, the number of the magnets 33 is at least three, and each of the guiding slots 41 is provided with a ball.

The number of the guiding slots 41 and the supporting apparatus 42 is four respectively, the magnetic members 43 and the guiding slots 41 are sequentially disposed at intervals on the orthogonal plane of the optical axis, and the position of the guiding slots 41 can be disposed on the corners of the orthogonal plane of the optical axis, the magnetic members 43 can be disposed on the four sides of the movable carrier 10, or the position of the guiding slots 41 can be disposed on the four sides of the orthogonal plane of the optical axis, and the magnetic members 43 can be disposed on the four corners of the movable carrier 10.

In some embodiments, the guiding slot 41 is recessed at opposite corners of the movable carrier 10 and the fixed base 22, respectively, and the supporting apparatus 42 can be rotatably supported on the four corners of the fixed base 22 and the movable carrier 10, thereby contributing to maintaining the stability of the movable carrier 10. And the guiding slot 41 and the supporting apparatus 42 are disposed at the four facing corners of the movable carrier 10 and the fixed base 22, so that the free space of the movable carrier 10 and the fixed base 22 can be fully utilized, thereby providing a larger space position for the guiding slot 41 to have a longer longitudinal size, so that in a case where the movable carrier 10 is guided by the guiding slot 41 and the supporting apparatus 42, a larger moving distance can be provided for the movable carrier 10, thereby facilitating the realization of optical anti-vibration with a larger distance.

As for the guiding slot 41 provided in the X direction, the length of the guiding slot 41 opened in the X direction is larger than the diameter of the supporting apparatus 42, and the size in the Y direction is equal to or slightly larger than the diameter of the supporting apparatus 42, thus ensuring the movement of the supporting apparatus 42 in the X direction. As for the guiding slot 41 provided in the Y direction, the length in the Y direction is larger than the diameter of the supporting apparatus 42, and the size in the X direction is equal to or slightly larger than the diameter of the supporting apparatus 42, so that the supporting apparatus 42 is ensured to move in the Y direction.

In some embodiments, the number of the magnets 33 is four, and the number of the second coils 32 and the number of the magnetic member 43 are equal to the number of the magnets 33. The magnets 33 are disposed along the four peripheries of the fixed base 22, and the magnets 33 and the magnetic member 43 are correspondingly disposed. The magnetic member 43 is disposed on the upper surface of the movable carrier 10 and on the four sides of the movable carrier 10. The second coils 32 overlays on the magnetic member 43, and the magnetic force is generated between the fixed base 22 and the movable carrier 10 via the magnetic member 43 and the magnets 33, the magnets 33 are located on the four sides of the fixed base 22, and since the four sides of the fixed base 22 have a larger space, a larger driving force can be provided.

In some embodiments, the first track 411, and the second track 412 have a U-shaped V-shaped or trapezoidal cross-sectional configuration.

In some embodiments, the second coil 32 is disposed on four sides of the movable carrier 10 and corresponding to the magnets 33, and an axial distance is formed between the second coil 32 and the magnets 33, the axial distance being 0.05-0.5 mm, preferably 0.1-0.3 mm, preferably 0.1 mm. Thus, the magnets 33 does not contact with the second coil 32 to cause interference, and good magnetic induction can be generated.

In some embodiments, the first coil 31 is attached to the outer side wall of the lens carrier 21, and the magnets 33 is a dual-purpose magnet, i.e. a common magnet of the first coil 31 and the second coil 32. In a case where the auto-focusing is operated, the first coil 31 is energized to generate electromagnetic induction with the magnets 33 to drive the first coil 31 and then drive the lens carrier 21 to move along the optical axis direction, thus realizing the AF of the lens. Since only the lens carrier 21 and the lens assembly 1 in the lens carrier 21 need to be driven to move, relatively speaking, the AF process only needs a small driving force to realize and reduce power consumption. In a case where the optical anti-vibration is operated, the second coil 32 can generate electromagnetic induction with the magnets 33 after being energized, so as to drive the second coil 32 to drive the movable carrier 10 and then drive the photosensitive assembly 60 to move, so that the photosensitive assembly 60 as a whole moves along the orthogonal plane direction of the optical axis. Four groups of the second coils 32 interact with the magnets 33 to generate greater driving force. In the present disclosure, the AF distance and the OIS distance are separately controlled to avoid interference between the AF and the OIS and to reduce the burden of the respective components.

Each of the magnets 33 comprises four magnetic poles, and each N pole and S pole are disposed adjacent to each other. Since the magnets 33 are dual-purpose magnets, the number of components can be reduced, and the structure of the photosensitive chip driving device 2 is simple. The first coil 31 and the second coil 32 can be provided with other position sensing devices such as IC and Hall devices so as to correspond to the magnets 33 for detecting the position of the magnets 33.

In some embodiments, the first coil 31 and the second coil 32 can not share the magnets 33. The first coil 31 is disposed on the peripheral side of the lens carrier 21. The magnets 33 comprises a first magnet and at least two second magnets. The first magnet is disposed on one side of the fixed base 22. The first magnet and the first coil 31 are disposed in a radial direction. In a case where the first coil 31 is energized, a magnetic field force is generated between the first magnet and the first coil 31 to drive the lens carrier 21 to move along the optical axis. The second magnet is disposed on another adjacent side of the fixed base 22. After being electrically activated, a magnetic field force is generated between the second magnet and the second coil 32 to drive the photosensitive assembly 60 with the movable carrier 10 to move along the orthogonal plane of the optical axis. The second magnet can also be disposed on the other three sides of the fixed base 22, or the first magnet can be disposed on the adjacent two sides of the fixed base 22, and the second magnet can be disposed on the other adjacent two sides of the fixed base 22.

In some embodiments, the number of the second magnets is two, and the second magnets are disposed on two adjacent sides of the fixed base 22, and optical anti-vibration in the X direction and Y direction has been realized.

In some embodiments, the fixed base 22 is provided with a receiving cavity 221 located around the fixed base 22, a first opening 222 opened in the radial inner side of the receiving cavity 221, and a second opening 223 opened in the axial lower side of the receiving cavity 221. The magnets 33 are fixed in the receiving cavity 221. The receiving cavity 221 is located at four sides of the fixed base 22, the receiving cavity 221 is an open cavity, the magnets 33 are fixed in the receiving cavity 221 by sticking upside down, the magnets 33 are disposed corresponding to the first coil 21 from a distance, and the magnets 33 are disposed corresponding to the second coil 32 from a distance.

In some embodiments, the carrier frame 20 further comprises an elastic supporter 23 elastically connected to the lens carrier 21 and the fixed base 22 to support the lens carrier 21 to move and focus relative to the fixed base 22 in the optical axis direction. The elastic supporter 23 comprises an upper elastic piece 231 movably connecting the lens carrier 21 and the upper surface of the fixed base 22, a lower elastic piece 232 movably connecting the lens carrier 21 and the lower surface of the fixed base 22, and at least a pair of extending portions 233 electrically conducted the fixed base 22 and the elastic supporter 23, so that the first coil 31 is electrically connected to the fixed base 22. The upper elastic piece 231 and the lower elastic piece 232 can be respectively fixed to the side wall of the fixed base 22 which is not limited in the present disclosure. Thus, the lens carrier 21 can be centered by the elastic supporter 23, which holds the lens carrier 21 in the fixed base 22 by an elastic force. Further, the elastic supporter 23 pulls the lens carrier 21 back to an initial position by an elastic force, where the initial position is a position before the lens carrier 21 is AF displaced in the optical axis direction. The upper surface and the lower surface are the directions of the lens carrier 21 and the fixed base 22 along the optical axis, respectively. The front of the optical axis is the upper surface, and the rear of the optical axis is the lower surface.

In some embodiments, the upper elastic piece 231 comprises an upper inner contour 234a, an upper outer contour 235a, and an upper elastic portion 236a, the upper elastic portion 236a elastically connecting the upper inner contour 234a and the upper outer contour 235a so that the upper inner contour 234a and the upper outer contour 235a can move relative to each other in the Z direction. The upper inner contour 234a is fixed to the upper surface of the lens carrier 21, and the upper outer contour 235a is fixed to the upper surface of the fixed base 22, so that the upper elastic piece 231a can movably connect the upper surface of the lens carrier 21 and the upper surface of the fixed base 22. The fixing manner is not limited, comprising embedded fixed or adhesive fixed. The upper elastic portion 236a has a meandering structure and is conducive for elastically connecting the upper inner contour 234a and the upper outer contour 235a.

In some embodiments, the lower elastic piece 232 and the upper elastic piece 231 are similar in structure, and the lower elastic piece 231 comprises a lower inner contour 234b, a lower outer contour 235b and a lower elastic portion 236b elastically connecting the lower inner contour 234b and the lower outer contour 235b so that the lower inner contour 234b and the lower outer contour 235b can move relative to each other in the Z direction. The lower inner contour 234b is fixed to the lower surface of the lens carrier 21, and the lower outer contour 235b is fixed to the lower surface of the fixed base 22, so that the lower elastic piece 231b can movably connect the lower surface of the lens carrier 21 and the lower surface of the fixed base 22. The fixing manner is not limited, comprising embedded fixed or adhesive fixed. The lower elastic portion 236 has a meandering structure and is conducive for elastically connecting the lower inner contour 234b and the lower outer contour 235b.

In some embodiments, each of the extending portions 233 comprises a first fixed end 237, a second fixed end 238, and a suspended wire 239 curvingly connecting the first fixed end 237 and the second fixed end 238, the first fixed end 237 fixed to the fixed base 22 and electrically connected to the fixed base 22, and a second fixed end 238 electrically connected to the upper elastic piece 231 and/or the lower elastic piece 232 to electrically conduct the first coil 31 and the fixed base 22 via the upper elastic piece 231 and/or the lower elastic piece 232.

In some embodiments, the number of the extending portions 233 can be two or four.

In a case where the number of the extending portions 233 is two, circuit conduction is realized via the extending portions 233. In a case where the number of the extending portions 233 is four, one pair of the extending portions 233 realizes circuit conduction, and the other pair of the extending portions 233 realizes the reset function of the photosensitive assembly 60 via the elastic force. Further, fixed at four corners of the fixed base 22, and one pair of extending portions 233 are integrally connected to two sides of the upper elastic piece 231 or two sides of the lower elastic piece 232, respectively, so that the first coil 31 and the fixed base 22 can be electrically connected. Thus, the electrical connection between the first coil 31 and the fixed base 22 can be realized via the circuit conduction between the extending portion 233 and the fixed base 22. The extending portion 233 can be integrated or separated with the upper elastic piece 231 or the lower elastic piece 232, the upper elastic piece 231 can be integrated or separated, and the lower elastic piece 232 can be integrated or separated. That is, the fixed base 22 integrates a conductive function, electrically connects the first coil 31 to the fixed base 22, and conducts to the outside of the photosensitive chip driving device 2 via the fixed base 22, so as to simplify the electrical connection structure of the photosensitive chip driving device 2.

In some embodiments, one pair of the extending portions 233 are provided at a pair of adjacent corners of the fixed base 22 to electrically conduct the first coil 31 and the fixed base 22, the first fixed end 237 and the second fixed end 238 are attached to the outer periphery of the fixed base 22, and the second fixed end 238 is fixed to the upper elastic piece 231 or the lower elastic piece 232. The other pair of the extending portions 233 are provided at another pair of adjacent corners of the fixed base 22. The first fixed end 237 is fixedly connected to the fixed base 22, the second fixed end 238 is fixedly connected to the movable carrier 10, the second fixed end 238 is not connected to the upper elastic piece 231 or the lower elastic piece 232, the other pair of the extending portions 233 is non-conductive, and provides a certain restoring force for OIS of the photosensitive assembly 60 by the elastic force. Optionally, the movable carrier 10 has at least two extending columns 13 extended upward from the corners of the movable carrier 10, so that the second fixed end 238 is fixedly connected to the extending columns 13, and the movable carrier 10 can be pulled back to an initial position by the elastic force of the extending portion 233. The initial position is a position before the movable carrier 10 is OIS displaced.

That is, the extending portion 233 comprises a pair of conductive extending portions 233a for electrically conducting the first coil 31 and the fixed base 22 and respectively located at a pair of ipsilateral corners of the fixed base 22, and a pair of the reset extending portions 233b respectively located at another pair of ipsilateral corners of the fixed base 22. The first fixed end 237 of the conductive extending portion 233a is fixedly connected to the fixed base 22, and the second fixed end 238 of the conductive extending portion 233a is fixedly connected to the upper elastic piece 231 or the lower elastic piece 232. The first fixed end 237 of the reset extending portion 233b is fixed to the fixed base 22, and the second fixed end 238 of the reset extending portion 233b is fixed to the extending column 13 of the movable carrier 10. The reset extending portion 233b is functional for resetting the movable carrier 10 moving along the orthogonal plane of the optical axis, and the movable carrier 10 is pulled back to an initial position by the elastic force of the reset extending portion 233b. The initial position is a position before the movable carrier is OIS displaced.

In some embodiments, the driving distance of the diving apparatus 30 for the lens carrier 21 along the optical axis direction is ±250µm, and the driving distance of the diving apparatus 30 for the movable carrier 10 along the orthogonal plane direction of the optical axis is ±150µm.

According to a second aspect of the present disclosure, a camera module is provided, which comprises a photosensitive chip driving device 2, a lens assembly 1, and a photosensitive assembly 60. The lens assembly 1 is provided with at least one lens, the photosensitive chip driving device 2 is for driving the lens assembly 1 to move along the optical axis direction to realize the auto-focusing of the camera module, and the photosensitive chip driving device 2 is for driving the photosensitive assembly 60 to move along the orthogonal plane direction of the optical axis to realize the optical anti-vibration of the camera module.

In some embodiments, the lens assembly 1 comprises a lens barrel and a plurality of lenses disposed along the optical axis direction. The lens barrel can be fixed with the lens carrier 21 by adhering or buckling, or the lens assembly 1 and the lens carrier 21 can be disposed in an integrated structure, that is, the lens carrier 21 can replace the lens barrel for receiving the lenses in the lens assembly 1. In a case where the lens carrier 21 moves along the optical axis direction, the lens assembly 1 can be driven to move to realize the AF function. Compared with the conventional motor structure, the lens barrel is fixed in the lens carrier 21 by the lens barrel, the integrated structure can reduce the size of the lens barrel, reduce the gap between the conventional lens barrel and the lens carrier 21, and beneficial to further reduce the size of the camera module.

In some embodiments, the photosensitive assembly 60 comprises a filter 61, a circuit board 62, a photosensitive chip 63, and an electronic component 64, the coil is electrically connected to the circuit board 62, the photosensitive chip 63 and the electronic component 64 are electrically connected to the circuit board 62, the filter 61 is attached inside the movable carrier 10, and the circuit board 62 and the photosensitive chip 63 are located at the rear of the movable carrier 10. The electronic component 64 is located outside the photosensitive chip 63. Further, the movable carrier 10 comprises a frame body 11 and an extending arm 12 extended inward from the frame body 11, and the filter 61 is attached to the extending arm 12. The extending arm 12 can have a step-type structure, the filter 61 is attached to an upper step of the extending arm 12, and the non-optical region of the photosensitive chip 63 is attached to a lower step of the extending arm 12.

In some embodiments, the circuit board 62, the photosensitive chip 63, the movable carrier 10, and the filter 61 are packaged into an integrated structure to form a closed space, so that the photosensitive chip 63 is received in the closed space, improving the sealing property of the photosensitive chip 63 and ensuring that the imaging of the photosensitive chip 63 is not affected by dust during the manufacture or use of the camera module.

In some embodiments, the circuit is integrally molded in the fixed base 22 by the insert molding technique, and the fixed base 22 is electrically connected to the circuit board 62 to facilitate the conduction of the wires between the fixed base 22 and the first coil 31.

In some embodiments, at least two LDS slots are provided on the outer surface of the fixed base 22, and a conductive plating layer is plated on the surface of the LDS slots. The fixed base 22 is electrically connected to the circuit board 62 via the conductive plating layer of the LDS slots, so as to facilitate the conduction of the wires between the fixed base 22 and the first coil 31. The depth of the LDS slot is not more than 20-30µm and the width is not less than 60µm. LDS (laser direct forming technology) is employed in the slot, and a conductive coating (such as nickel palladium coating) is plated on the surface of the LDS slot, so that interference from other internal metals can be avoided and circuit conduction can be realized.

In some embodiments, the second coil 32 is electrically connected to a circuit board 62 of the photosensitive assembly 60, and extended upwardly via the circuit board 62 to conduct to the fixed base 22, which is electrically connected to the first coil 31 via the conductive extending portion 233b to realize the electrical connection structure of the camera module.

In some embodiments, the camera module further comprises a shell 50, the photosensitive chip driving device 2 and the photosensitive assembly 60 are received inside the shell, and the fixed base 22 is fixedly connected to the shell 50. The shell 50 comprises a first shell body 51 covering the carrier frame 20 from the front, and a second shell body 52 covering the photosensitive assembly 60 from the rear. The carrier frame 20 supports the movable carrier 10 to move along the orthogonal plane of the optical axis to prevent the imaging assembly from punching out and causing damage to the camera module when an external impact occurs. The fixed base 22 is fixed to the first shell body 51 and the second shell body 52.

The basic principles, main features, and advantages of the present disclosure are described above. Those skilled in the art will appreciate that the present disclosure is not limited by the above-described embodiments that only the principles of the present disclosure are described in the above-mentioned embodiments and the description, and that various variations and modifications can be made to the present disclosure without departing from the defined by the appended claims.

## Claims

1. A photosensitive chip driving device (2), comprising:
a movable carrier (10) for carrying the photosensitive assembly (60);
a fixed base (22), wherein the fixed base (22) and the movable carrier (10) are disposed correspondingly at intervals along an optical axis direction;
a driving apparatus (30) comprising at least one first group of coils and at least one group of magnets (33) mounted on the peripheral side of the fixed base (22), and at least one second group of coils being mounted on the peripheral side of the movable carrier (10);
a guiding slot (41) disposed between the movable carrier (10) and the fixed base (22);
a supporting apparatus (42) movably disposed in the guiding slot (41); and
a magnetic member (43) mounted on the movable carrier (10) and disposed corresponding to the magnets (33), so that a magnetic force along the optical axis direction is generated between the magnetic member (43) and the magnets (33), wherein the supporting apparatus (42) is clamped between the fixed base (22) and the movable carrier (10);
**characterized in that**
the at least one second
group of coils comprises at least a second coil (32), the second coil (32) is mounted on the peripheral side of the movable carrier (10), the magnets (33) and the second coil (32) are axially disposed correspondingly, the second coil (32) and the magnets (33) form a second magnetic field loop to drive the movable carrier (10) to move relative to the fixed base (22) along the orthogonal plane of the optical axis and to correct the vibration of the photosensitive assembly (60), and the magnetic member (43) is disposed in the photosensitive assembly (60) with the movable carrier (10) to drive the photosensitive assembly (60) to reset along the orthogonal plane of the optical axis;
the photosensitive chip driving device (2) further comprises a carrier frame (20), and the carrier frame (20) comprises a lens carrier (21) and the fixed base (22) disposed on the outer periphery of the lens carrier (21), the lens assembly (1) is received in the lens carrier (21), the at least one first group of coils further comprises at least one first coil (31), the magnets (33) and the first coil (31) are radially disposed correspondingly, and the first coil (31) and the magnets (33) form a first magnetic field loop to drive the lens carrier (21) to move along the optical axis direction, for automatic focusing; and
the fixed base (22) is provided with a receiving cavity (221), a first opening (222), and a second opening (223), the receiving cavity (221) is disposed around the fixed base (22), the first opening (222) is disposed at the radial inner side of the receiving cavity (221), the second opening (223) is disposed at the axial lower side of the receiving cavity (221), and the magnets (33) are fixed in the receiving cavity (221).

2. The photosensitive chip driving device (2) according to claim 1, **characterized in** the magnets (33) and the second coil (32) are axially disposed correspondingly, the magnetic member (43) is located on a rear surface of the second coil (32), and the magnetic member (43) and the second coil (32) are axially fixed around the movable carrier (10) correspondingly.

3. The photosensitive chip driving device (2) according to claim 1, **characterized in** the guiding slot (41) comprises a plurality of tracks respectively disposed on the facing surfaces of the movable carrier (10) and the fixed base (22), and each supporting apparatus (42) is received in each of the tracks, so that the supporting apparatus (42) rotatably supports the movable carrier (10) to move radially along the orthogonal plane of the optical axis.

4. The photosensitive chip driving device (2) according to claim 3, **characterized in** the guiding slot (41) is provided with a first track (411) and a second track (412), the first track (411) and the second track (412) are arranged in a cross structure in a plane perpendicular to the optical axis direction, and are respectively located at the intervals of the adjacent second coils (32), the first track (411) is disposed on the upper surface of the movable carrier (10) along the X direction or Y direction, and the second track (412) is relatively disposed on the lower surface of the fixed base (22) along the Y direction or X direction, so that the supporting apparatus (42) can move in the first track (411) or the second track (412);
preferably, the cross-sectional structures of the first track (411) and the second track (412) are U-shaped, V-shaped or trapezoidal.

5. The photosensitive chip driving device (2) according to claim 3, **characterized in** the number of the supporting apparatus (42) is at least three, the number of the guiding slots (41) is at least three pairs, and the supporting apparatus (42) is balls;
or, the number of the guiding slots (41) and the supporting apparatus (42) are respectively four, the guiding slots (41) are respectively recessed at four facing corners of the movable carrier (10) and four facing corners of the fixed base (22), and the supporting apparatus (42) rotatably supports on the four corners of the movable carrier (10).

6. The photosensitive chip driving device (2) according to claim 1, **characterized in** an axial distance is formed between the second coil (32) and the magnets (33), the axial distance being 0.05 to 0.5 mm;
or, the magnetic member (43) and the guiding slot (41) are sequentially disposed at intervals on the orthogonal plane of the optical axis, the magnetic member (43) is an iron sheet, the number of the magnets (33) is four, the number of the second coils (32) and the number of the magnetic members (43) are equal with the number of the magnets (33), and the magnets (33) are disposed along four peripheral sides of the fixed base.

7. The photosensitive chip driving device (2) according to claim 1, **characterized in** the carrier frame (20) further comprises an elastic supporter (23) elastically connected to the lens carrier (21) and the fixed base (22), the elastic supporter (23) supports the lens carrier (21) to move and focus relative to the fixed base (22) along the optical axis direction, and the elastic supporter (23) comprises an upper elastic piece (231) movably connecting the upper surface of the lens carrier (21) and the fixed base (22), a lower elastic piece (232) movably connecting the lower surface of the lens carrier (21) and the fixed base (22), and at least one pair of extending portions (233) electrically conducted to the fixed base (22) and the elastic supporter (23) so that the first coil (31) is electrically connected to the fixed base(22);
preferably, the extending portions (233) are two or four, respectively fixed at the corners of the fixed base (22), each of the extending portions (233) comprises a first fixed end (237), a second fixed end (238), and a suspended wire (239) curvingly connecting the first fixed end (237) and the second fixed end (238), and the first fixed end (237) is fixed to the fixed base (22).

8. The photosensitive chip driving device (2) according to claim 1, **characterized in** the magnets (33) comprise a first magnet and at least two second magnets, the first magnet is disposed on one side of the fixed base (22), the first magnet and the first coil (31) are radially disposed correspondingly to drive the lens carrier (21) to move along the optical axis, the second magnet is disposed on the other adjacent two sides of the fixed base (22), the second magnet and the second coil (32) are axially disposed correspondingly to drive the movable carrier (10) to move along the orthogonal plane of the optical axis.

9. The photosensitive chip driving device (2) according to claim 1, **characterized in** the driving distance of the diving apparatus (30) for the lens carrier (21) along the optical axis direction is ±250µm, and the driving distance of the driving apparatus (30) for the movable carrier (10) along the orthogonal plane direction of the optical axis is ±150µm.

10. A camera module, **characterized by** comprising:
the photosensitive chip driving device (2) according to any one of claims 1 to 9;
a lens assembly (1) provided with at least one lens and is disposed in the fixed base (22); and
a photosensitive assembly (60) capable of photosensitive imaging, and the photosensitive chip driving device (2) is for driving the photosensitive assembly (60) to be displaced along the orthogonal plane direction of the optical axis.

11. The camera module according to claim 10, **characterized in** the photosensitive assembly (60) comprises a filter (61), a circuit board (62), a photosensitive chip (63), and an electronic component (64), the coil is electrically connected to the circuit board (62), the photosensitive chip (63) and the electronic component (64) are electrically connected to the circuit board (62), the filter (61) is attached inside the movable carrier (10), and the circuit board (62) and the photosensitive chip (63) are located at a rear of the movable carrier (10) facing in the -Z direction, where the Z direction is defined as the optical axis direction.

12. The camera module according to claim 11, **characterized in** the circuit is integrally molded in the fixed base (22) by embedded injection molding, and the fixed base (22) is electrically connected to the circuit board (62); or, a laser direct forming technology (LDS) slot is disposed on the outer surface of the fixed base (22), and a conductive plating layer is plated on the surface of the LDS slot, and the fixed base (22) is electrically connected to the circuit board (62) via the conductive plating layer of the LDS slot;
or, the movable carrier (10) comprises a frame body (11) and an extending arm (12) extended inward from the frame body (11), and the filter (61) is attached to the extending arm (12),
preferably, the extending arm (12) can have a step-type structure, the filter (61) is attached to the upper step of the extending arm (12), and the non-optical area of the photosensitive chip (63) or the circuit board (62) is attached to the lower step of the extending arm (12).

## Patentansprüche

1. Lichtempfindliche Chip-Antriebsvorrichtung (2), umfassend:
einen beweglichen Träger (10) zum Tragen der lichtempfindlichen Anordnung (60);
eine feste Basis (22), wobei die feste Basis (22) und der bewegliche Träger (10) in Abständen entlang einer Richtung der optischen Achse entsprechend angeordnet sind;
eine Antriebseinrichtung (30), umfassend mindestens eine erste Gruppe von Spulen und mindestens eine Gruppe von Magneten (33), die an der Umfangsseite der festen Basis (22) montiert sind, und mindestens eine zweite Gruppe von Spulen, die an der Umfangsseite des beweglichen Trägers (10) montiert ist;
einen Führungsschlitz (41), der zwischen dem beweglichen Träger (10) und der festen Basis (22) angeordnet ist;
eine Stützeinrichtung (42), die beweglich in dem Führungsschlitz (41) angeordnet ist; und
ein magnetisches Element (43), das an dem beweglichen Träger (10) montiert und entsprechend den Magneten (33) angeordnet ist, so dass eine Magnetkraft entlang der Richtung der optischen Achse zwischen dem magnetischen Element (43) und den Magneten (33) erzeugt wird, wobei die Stützeinrichtung (42) zwischen der festen Basis (22) und dem beweglichen Träger (10) eingeklemmt ist;
**dadurch gekennzeichnet, dass**
die mindestens eine zweite Gruppe von Spulen mindestens eine zweite Spule (32) umfasst, die zweite Spule (32) an der Umfangsseite des beweglichen Trägers (10) montiert ist, die Magnete (33) und die zweite Spule (32) axial entsprechend angeordnet sind, die zweite Spule (32) und die Magnete (33) einen zweiten Magnetfeldkreis bilden, um den beweglichen Träger (10) anzutreiben, sich relativ zu der festen Basis (22) entlang der orthogonalen Ebene der optischen Achse zu bewegen und die Vibration der lichtempfindlichen Anordnung (60) zu korrigieren, und das magnetische Element (43) in der lichtempfindlichen Anordnung (60) mit dem beweglichen Träger (10) angeordnet ist, um die lichtempfindliche Anordnung (60) anzutreiben, sich entlang der orthogonalen Ebene der optischen Achse zurückzusetzen;
dass die lichtempfindliche Chip-Antriebsvorrichtung (2) ferner einen Trägerrahmen (20) umfasst, und der Trägerrahmen (20) einen Linsenträger (21) und die an dem Außenumfang des Linsenträgers (21) angeordnete feste Basis (22) umfasst, die Linsenanordnung (1) in dem Linsenträger (21) aufgenommen ist, die mindestens eine erste Gruppe von Spulen ferner mindestens eine erste Spule (31) umfasst, die Magnete (33) und die erste Spule (31) radial entsprechend angeordnet sind, und die erste Spule (31) und die Magnete (33) einen ersten Magnetfeldkreis bilden, um den Linsenträger (21) anzutreiben, sich entlang der Richtung der optischen Achse zu bewegen, zum automatischen Fokussieren; und
dass die feste Basis (22) mit einer Aufnahmekammer (221), einer ersten Öffnung (222) und einer zweiten Öffnung (223) versehen ist, die Aufnahmekammer (221) um die feste Basis (22) herum angeordnet ist, die erste Öffnung (222) an der radialen Innenseite der Aufnahmekammer (221) angeordnet ist, die zweite Öffnung (223) an der axialen Unterseite der Aufnahmekammer (221) angeordnet ist, und die Magnete (33) in der Aufnahmekammer (221) befestigt sind.

2. Lichtempfindliche Chip-Antriebsvorrichtung (2) nach Anspruch 1, **dadurch gekennzeichnet, dass** die Magnete (33) und die zweite Spule (32) axial entsprechend angeordnet sind, das magnetische Element (43) an einer rückseitigen Fläche der zweiten Spule (32) angeordnet ist, und das magnetische Element (43) und die zweite Spule (32) axial entsprechend um den beweglichen Träger (10) herum befestigt sind.

3. Lichtempfindliche Chip-Antriebsvorrichtung (2) nach Anspruch 1, **dadurch gekennzeichnet, dass** der Führungsschlitz (41) eine Vielzahl von Laufbahnen umfasst, die jeweils an den einander zugewandten Flächen des beweglichen Trägers (10) und der festen Basis (22) angeordnet sind, und jede Stützeinrichtung (42) in jeder der Laufbahnen aufgenommen ist, so dass die Stützeinrichtung (42) den beweglichen Träger (10) drehbar stützt, um sich radial entlang der orthogonalen Ebene der optischen Achse zu bewegen.

4. Lichtempfindliche Chip-Antriebsvorrichtung (2) nach Anspruch 3, **dadurch gekennzeichnet, dass** der Führungsschlitz (41) mit einer ersten Laufbahn (411) und einer zweiten Laufbahn (412) versehen ist, wobei die erste Laufbahn (411) und die zweite Laufbahn (412) in einer Kreuzstruktur in einer Ebene senkrecht zu der Richtung der optischen Achse angeordnet sind und jeweils an den Zwischenräumen der benachbarten zweiten Spulen (32) angeordnet sind, und wobei die erste Laufbahn (411) an der oberen Fläche des beweglichen Trägers (10) entlang der X-Richtung oder Y-Richtung angeordnet ist und die zweite Laufbahn (412) relativ an der unteren Fläche der festen Basis (22) entlang der Y-Richtung oder X-Richtung angeordnet ist, so dass sich die Stützeinrichtung (42) in der ersten Laufbahn (411) oder der zweiten Laufbahn (412) bewegen kann; vorzugsweise, wobei die Querschnittsstrukturen der ersten Laufbahn (411) und der zweiten Laufbahn (412) U-förmig, V-förmig oder trapezförmig sind.

5. Lichtempfindliche Chip-Antriebsvorrichtung (2) nach Anspruch 3, **dadurch gekennzeichnet, dass** die Anzahl der Stützeinrichtungen (42) mindestens drei beträgt, die Anzahl der Führungsschlitze (41) mindestens drei Paare beträgt und die Stützeinrichtungen (42) Kugeln sind;
oder dass die Anzahl der Führungsschlitze (41) und der Stützeinrichtungen (42) jeweils vier beträgt, die Führungsschlitze (41) jeweils an vier einander zugewandten Ecken des beweglichen Trägers (10) und vier einander zugewandten Ecken der festen Basis (22) vertieft sind und die Stützeinrichtung (42) an den vier Ecken des beweglichen Trägers (10) drehbar stützt.

6. Lichtempfindliche Chip-Antriebsvorrichtung (2) nach Anspruch 1, **dadurch gekennzeichnet, dass** ein axialer Abstand zwischen der zweiten Spule (32) und den Magneten (33) gebildet ist, wobei der axiale Abstand 0,05 bis 0,5 mm beträgt;
oder dass das magnetische Element (43) und der Führungsschlitz (41) nacheinander in Abständen auf der orthogonalen Ebene der optischen Achse angeordnet sind, das magnetische Element (43) ein Eisenblech ist, die Anzahl der Magnete (33) vier beträgt, die Anzahl der zweiten Spulen (32) und die Anzahl der magnetischen Elemente (43) gleich der Anzahl der Magnete (33) sind und die Magnete (33) entlang vier Umfangsseiten der festen Basis angeordnet sind.

7. Lichtempfindliche Chip-Antriebsvorrichtung (2) nach Anspruch 1, **dadurch gekennzeichnet, dass** der Trägerrahmen (20) ferner eine elastische Stütze (23) umfasst, die elastisch mit dem Linsenträger (21) und der festen Basis (22) verbunden ist, wobei die elastische Stütze (23) den Linsenträger (21) stützt, um sich relativ zu der festen Basis (22) entlang der Richtung der optischen Achse zu bewegen und zu fokussieren, und die elastische Stütze (23) ein oberes elastisches Stück (231), das die obere Fläche des Linsenträgers (21) und die feste Basis (22) beweglich verbindet, ein unteres elastisches Stück (232), das die untere Fläche des Linsenträgers (21) und die feste Basis (22) beweglich verbindet, und mindestens ein Paar von Verlängerungsabschnitten (233) umfasst, die elektrisch mit der festen Basis (22) und der elastischen Stütze (23) leitend verbunden sind, so dass die erste Spule (31) elektrisch mit der festen Basis (22) verbunden ist;
vorzugsweise, wobei die Verlängerungsabschnitte (233) zwei oder vier und jeweils an den Ecken der festen Basis (22) befestigt sind, wobei jeder der Verlängerungsabschnitte (233) ein erstes befestigtes Ende (237), ein zweites befestigtes Ende (238) und einen aufgehängten Draht (239) umfasst, der das erste befestigte Ende (237) und das zweite befestigte Ende (238) gekrümmt verbindet, und das erste befestigte Ende (237) an der festen Basis (22) befestigt ist.

8. Lichtempfindliche Chip-Antriebsvorrichtung (2) nach Anspruch 1, **dadurch gekennzeichnet, dass** die Magnete (33) einen ersten Magneten und mindestens zwei zweite Magnete umfassen, wobei der erste Magnet an einer Seite der festen Basis (22) angeordnet ist, der erste Magnet und die erste Spule (31) radial entsprechend angeordnet sind, um den Linsenträger (21) anzutreiben, sich entlang der optischen Achse zu bewegen, und wobei der zweite Magnet an den anderen benachbarten zwei Seiten der festen Basis (22) angeordnet ist, der zweite Magnet und die zweite Spule (32) axial entsprechend angeordnet sind, um den beweglichen Träger (10) anzutreiben, sich entlang der orthogonalen Ebene der optischen Achse zu bewegen.

9. Lichtempfindliche Chip-Antriebsvorrichtung (2) nach Anspruch 1, **dadurch gekennzeichnet, dass** der Antriebsweg der Antriebseinrichtung (30) für den Linsenträger (21) entlang der Richtung der optischen Achse ±250 µm beträgt und der Antriebsweg der Antriebseinrichtung (30) für den beweglichen Träger (10) entlang der Richtung der orthogonalen Ebene der optischen Achse ±150 µm beträgt.

10. Kameramodul, **dadurch gekennzeichnet, dass** es umfasst:
die lichtempfindliche Chip-Antriebsvorrichtung (2) nach einem der Ansprüche 1 bis 9;
eine Linsenanordnung (1), die mit mindestens einer Linse versehen und in der festen Basis (22) angeordnet ist; und
eine lichtempfindliche Anordnung (60), die zur lichtempfindlichen Abbildung fähig ist, und wobei die lichtempfindliche Chip-Antriebsvorrichtung (2) dazu dient, die lichtempfindliche Anordnung (60) anzutreiben, um entlang der Richtung der orthogonalen Ebene der optischen Achse versetzt zu werden.

11. Kameramodul nach Anspruch 10, **dadurch gekennzeichnet, dass** die lichtempfindliche Anordnung (60) einen Filter (61), eine Leiterplatte (62), einen lichtempfindlichen Chip (63) und ein elektronisches Bauelement (64) umfasst, wobei die Spule elektrisch mit der Leiterplatte (62) verbunden ist, der lichtempfindliche Chip (63) und das elektronische Bauelement (64) elektrisch mit der Leiterplatte (62) verbunden sind, der Filter (61) innerhalb des beweglichen Trägers (10) angebracht ist und die Leiterplatte (62) und der lichtempfindliche Chip (63) an einer Rückseite des beweglichen Trägers (10) angeordnet sind, die in die -Z-Richtung weist, wobei die Z-Richtung als die Richtung der optischen Achse definiert ist.

12. Kameramodul nach Anspruch 11, **dadurch gekennzeichnet, dass** die Schaltung durch Einlege-Spritzgießen einstückig in die feste Basis (22) eingeformt ist und die feste Basis (22) elektrisch mit der Leiterplatte (62) verbunden ist; oder dass ein Schlitz durch Laserdirektformungstechnologie (LDS) an der Außenfläche der festen Basis (22) angeordnet ist und eine leitfähige Plattierungsschicht auf der Oberfläche des LDS-Schlitzes plattiert ist und die feste Basis (22) über die leitfähige Plattierungsschicht des LDS-Schlitzes elektrisch mit der Leiterplatte (62) verbunden ist;
oder dass der bewegliche Träger (10) einen Rahmenkörper (11) und einen sich von dem Rahmenkörper (11) nach innen erstreckenden Verlängerungsarm (12) umfasst und der Filter (61) an dem Verlängerungsarm (12) angebracht ist, vorzugsweise, wobei der Verlängerungsarm (12) eine stufenartige Struktur aufweisen kann, wobei der Filter (61) an der oberen Stufe des Verlängerungsarms (12) angebracht ist und der nicht-optische Bereich des lichtempfindlichen Chips (63) oder der Leiterplatte (62) an der unteren Stufe des Verlängerungsarms (12) angebracht ist.

## Revendications

1. Un dispositif d'entraînement de puce photosensible (2), comprenant :
un support mobile (10) destiné à porter l'assemblage photosensible (60) ;
une base fixe (22), dans lequel la base fixe (22) et le support mobile (10) sont disposés de manière correspondante à intervalles le long d'une direction d'axe optique ;
un appareil d'entraînement (30) comprenant au moins un premier groupe de bobines et au moins un groupe d'aimants (33) montés sur le côté périphérique de la base fixe (22), et au moins un deuxième groupe de bobines étant monté sur le côté périphérique du support mobile (10) ;
une rainure de guidage (41) disposée entre le support mobile (10) et la base fixe (22) ;
un appareil de support (42) disposé de manière mobile dans la rainure de guidage (41) ; et
un élément magnétique (43) monté sur le support mobile (10) et disposé de manière correspondante aux aimants (33), de sorte qu'une force magnétique le long de la direction d'axe optique soit générée entre l'élément magnétique (43) et
les aimants (33), dans lequel l'appareil de support (42) est serré entre la base fixe (22) et le support mobile (10) ;
**caractérisé en ce que**
ledit au moins un deuxième groupe de bobines comprend au moins une deuxième bobine (32), la deuxième bobine (32) est montée sur le côté périphérique du support mobile (10), les aimants (33) et la deuxième bobine (32) sont disposés de manière correspondante axialement, la deuxième bobine (32) et les aimants (33) forment une deuxième boucle de champ magnétique pour entraîner le support mobile (10) à se déplacer par rapport à la base fixe (22) le long du plan orthogonal à l'axe optique et pour corriger la vibration de l'assemblage photosensible (60), et l'élément magnétique (43) est disposé dans l'assemblage photosensible (60) avec le support mobile (10) pour entraîner l'assemblage photosensible (60) à se réinitialiser le long du plan orthogonal à l'axe optique ;
le dispositif d'entraînement de puce photosensible (2) comprend en outre un cadre de support (20), et le cadre de support (20) comprend un support de lentille (21) et la base fixe (22) disposée sur la périphérie extérieure du support de lentille (21), l'assemblage de lentilles (1) est reçu dans le support de lentille (21), l'au moins un premier groupe de bobines comprend en outre au moins une première bobine (31), les aimants (33) et la première bobine (31) sont disposés de manière correspondante radialement, et la première bobine (31) et les aimants (33) forment une première boucle de champ magnétique pour entraîner le support de lentille (21) à se déplacer le long de la direction d'axe optique, pour une mise au point automatique ;
et la base fixe (22) est pourvue d'une cavité de réception (221), d'une première ouverture (222) et d'une deuxième ouverture (223), la cavité de réception (221) est disposée autour de la base fixe (22), la première ouverture (222) est disposée au côté radial intérieur de la cavité de réception (221), la deuxième ouverture (223) est disposée au côté axial inférieur de la cavité de réception (221), et les aimants (33) sont fixés dans la cavité de réception (221).

2. Le dispositif d'entraînement de puce photosensible (2) selon la revendication 1, **caractérisé en ce que** les aimants (33) et la deuxième bobine (32) sont disposés de manière correspondante axialement, l'élément magnétique (43) est situé sur une surface arrière de la deuxième bobine (32), et l'élément magnétique (43) et la deuxième bobine (32) sont fixés axialement autour du support mobile (10) de manière correspondante.

3. Le dispositif d'entraînement de puce photosensible (2) selon la revendication 1, **caractérisé en ce que** la rainure de guidage (41) comprend une pluralité de pistes disposées respectivement sur les surfaces en regard du support mobile (10) et de la base fixe (22), et chaque appareil de support (42) est reçu dans chacune des pistes, de sorte que l'appareil de support (42) supporte de manière rotative le support mobile (10) pour se déplacer radialement le long du plan orthogonal à l'axe optique.

4. Le dispositif d'entraînement de puce photosensible (2) selon la revendication 3, **caractérisé en ce que** la rainure de guidage (41) est pourvue d'une première piste (411) et d'une deuxième piste (412), la première piste (411) et la deuxième piste (412) sont agencées selon une structure en croix dans un plan perpendiculaire à la direction d'axe optique, et sont respectivement situées aux intervalles des deuxièmes bobines (32) adjacentes, la première piste (411) est disposée sur la surface supérieure du support mobile (10) le long de la direction X ou de la direction Y, et la deuxième piste (412) est disposée en regard sur la surface inférieure de la base fixe (22) le long de la direction Y ou de la direction X, de sorte que l'appareil de support (42) puisse se déplacer dans la première piste (411) ou la deuxième piste (412) ;
de préférence, les structures en coupe transversale de la première piste (411) et de la deuxième piste (412) sont en forme de U, en forme de V ou trapézoïdales.

5. Le dispositif d'entraînement de puce photosensible (2) selon la revendication 3, **caractérisé en ce que** le nombre de l'appareil de support (42) est d'au moins trois, le nombre des rainures de guidage (41) est d'au moins trois paires, et l'appareil de support (42) est constitué de billes ;
ou, le nombre des rainures de guidage (41) et des appareils de support (42) est respectivement de quatre, les rainures de guidage (41) sont respectivement en creux au niveau de quatre coins en regard du support mobile (10) et de quatre coins en regard de la base fixe (22), et l'appareil de support (42) supporte de manière rotative sur les quatre coins du support mobile (10).

6. Le dispositif d'entraînement de puce photosensible (2) selon la revendication 1, **caractérisé en ce qu'**une distance axiale est formée entre la deuxième bobine (32) et les aimants (33), la distance axiale étant de 0,05 à 0,5 mm ;
ou, l'élément magnétique (43) et la rainure de guidage (41) sont disposés séquentiellement à intervalles sur le plan orthogonal à l'axe optique, l'élément magnétique (43) est une feuille de fer, le nombre des aimants (33) est de quatre, le nombre des deuxièmes bobines (32) et le nombre des éléments magnétiques (43) sont égaux au nombre des aimants (33), et les aimants (33) sont disposés le long de quatre côtés périphériques de la base fixe.

7. Le dispositif d'entraînement de puce photosensible (2) selon la revendication 1, **caractérisé en ce que** le cadre de support (20) comprend en outre un support élastique (23) relié élastiquement au support de lentille (21) et à la base fixe (22), le support élastique (23) supporte le support de lentille (21) pour se déplacer et effectuer la mise au point par rapport à la base fixe (22) le long de la direction d'axe optique, et le support élastique (23) comprend une pièce élastique supérieure (231) reliant de manière mobile la surface supérieure du support de lentille (21) et la base fixe (22), une pièce élastique inférieure (232) reliant de manière mobile la surface inférieure du support de lentille (21) et la base fixe (22), et au moins une paire de parties d'extension (233) en conduction électrique avec la base fixe (22) et le support élastique (23) de sorte que la première bobine (31) soit électriquement reliée à la base fixe (22) ;
de préférence, les parties d'extension (233) sont au nombre de deux ou quatre, fixées respectivement aux coins de la base fixe (22), chacune des parties d'extension (233) comprend une première extrémité fixe (237), une deuxième extrémité fixe (238), et un fil suspendu (239) reliant de manière courbe la première extrémité fixe (237) et la deuxième extrémité fixe (238), et la première extrémité fixe (237) est fixée à la base fixe (22).

8. Le dispositif d'entraînement de puce photosensible (2) selon la revendication 1, **caractérisé en ce que** les aimants (33) comprennent un premier aimant et au moins deux deuxièmes aimants, le premier aimant est disposé sur un côté de la base fixe (22), le premier aimant et la première bobine (31) sont disposés de manière correspondante radialement pour entraîner le support de lentille (21) à se déplacer le long de l'axe optique, le deuxième aimant est disposé sur les deux autres côtés adjacents de la base fixe (22), le deuxième aimant et la deuxième bobine (32) sont disposés de manière correspondante axialement pour entraîner le support mobile (10) à se déplacer le long du plan orthogonal à l'axe optique.

9. Le dispositif d'entraînement de puce photosensible (2) selon la revendication 1, **caractérisé en ce que** la distance d'entraînement de l'appareil d'entraînement (30) pour le support de lentille (21) le long de la direction d'axe optique est de ±250 µm, et la distance d'entraînement de l'appareil d'entraînement (30) pour le support mobile (10) le long de la direction du plan orthogonal à l'axe optique est de ±150 µm.

10. Un module de caméra, **caractérisé en ce qu'**il comprend :
le dispositif d'entraînement de puce photosensible (2) selon l'une quelconque des revendications 1 à 9 ;
un assemblage de lentilles (1) pourvu d'au moins une lentille et disposé dans la base fixe (22) ; et
un assemblage photosensible (60) apte à une imagerie photosensible, et le dispositif d'entraînement de puce photosensible (2) est destiné à entraîner l'assemblage photosensible (60) à se déplacer le long de la direction du plan orthogonal à l'axe optique.

11. Le module de caméra selon la revendication 10, **caractérisé en ce que** l'assemblage photosensible (60) comprend un filtre (61), une carte de circuit imprimé (62), une puce photosensible (63) et un composant électronique (64), la bobine est électriquement reliée à la carte de circuit imprimé (62), la puce photosensible (63) et le composant électronique (64) sont électriquement reliés à la carte de circuit imprimé (62), le filtre (61) est fixé à l'intérieur du support mobile (10), et la carte de circuit imprimé (62) et la puce photosensible (63) sont situées à l'arrière du support mobile (10) orientées dans la direction -Z, où la direction Z est définie comme la direction d'axe optique.

12. Le module de caméra selon la revendication 11, **caractérisé en ce que** le circuit est intégralement moulé dans la base fixe (22) par moulage par injection d'inserts, et la base fixe (22) est électriquement reliée à la carte de circuit imprimé (62) ; ou, une rainure de technologie de formation directe par laser (LDS) est disposée sur la surface extérieure de la base fixe (22), et une couche de placage conductrice est plaquée sur la surface de la rainure LDS, et la base fixe (22) est électriquement reliée à la carte de circuit imprimé (62) par l'intermédiaire de la couche de placage conductrice de la rainure LDS ;
ou, le support mobile (10) comprend un corps de cadre (11) et un bras d'extension (12) s'étendant vers l'intérieur depuis le corps de cadre (11), et le filtre (61) est fixé au bras d'extension (12),
de préférence, le bras d'extension (12) peut avoir une structure en escalier, le filtre (61) est fixé à la marche supérieure du bras d'extension (12), et la zone non optique de la puce photosensible (63) ou de la carte de circuit imprimé (62) est fixée à la marche inférieure du bras d'extension (12).
